# EUROPEAN PATENT APPLICATION

(11) **EP 1 919 202 A1**
(43) Date of publication of application: **07.05.2008**
(21) Application number: 06255632.9
(22) Date of filing: 01.11.2006
(51) Int. Cl.: H04N 5/445

(54) **Television channel selection**

(71) Applicant: Sony España SA, 08032 Barcelona (ES)
(72) Inventor: Fontquerni Xandri, Xavier, 08619 Montclar Barcelona (ES)
(74) Representative: Merryweather, Colin Henry

(57) **Abstract**

A receiver apparatus, having a receiver unit selectively operable to receive a television signal of any one of a plurality of channels, provides display of a channel listing comprising an array of representations of channels arranged in two dimensions. Responsive to navigational user inputs a cursor marking a representation of a channel on the displayed channel listing is moved in directions in the two dimensions. The receiver unit is controlled to receive the televison signal of the channel marked by the cursor, either in response to a channel selection user input or after a predetermined time. The two dimensional channel listing allows for more speedy navigation.

## Description

The present invention relates to the selection of channels in a receiver apparatus capable of receiving television signals of a plurality of channels.

To assist the user in deciding on the selection of channels, a known and indeed common technique is to provide display of a channel listing in which representations of the channels, typically the names of the channels, are listed. A cursor may be moved in response to user inputs, for example from a remote control unit, to selectively mark different channels and the receiver apparatus is controlled to receive the televison signal of the channel marked by the cursor, for example in response to a channel selection user input.

Because of the need to move down successive channels in the list, this technique generally becomes slower and more labourious for the user as the total number of channels increases and hence the average distance between the current and desired channels increases. This problem becomes ever more acute as the number of channels which can be received increases with new broadcast technologies.

One known technique for dealing with this problem is for the channels in the channel listing to be ordered, either automatically or under the control of the user, to locate frequently accessed channels at the beginning of the list. Whilst this can in principle reduce the average distance during channel selection the ordering is difficult to implement automatically and inconvenient for the user, and in any event there will remain occasions when the user will wish to change the channel to a channel which is distant from the current channel in the channel listing.

It would be desirable to therefore to improve the channel selection to make it quicker and less labourious for the user.

According to an aspect of the present invention, there is provided a method of providing channel selection in a receiver apparatus capable of receiving television signals of a plurality of channels, the method comprising:
providing display of a channel listing comprising an array of representations of channels arranged in at least two dimensions;
in response to navigational user inputs, moving a cursor marking a representation of a channel on the displayed channel listing in directions in the at least two dimensions indicated by the navigational user inputs; and
controlling the receiver apparatus to receive the televison signal of the channel marked by the cursor.

As the channel listing comprises the representations of channels arranged in at least two dimensions and the cursor can be moved in directions in those two dimensions, it becomes possible for the user to navigate the channel listing much more quickly than with the known technique discussed above in which the representations of the channels are arranged in a list, that is in one dimension. This is because the average distance between the channels is reduced due to the channels being arranged in two dimensions. As a result the speed of channel selection is in general reduced and the channel selection becomes less labourious for the user.

According to a further aspect of the present invention, there is provided a receiver apparatus for receiving television signals in which a similar method of providing channel selection is implemented.

To allow better understanding, an embodiment of the present invention will now be described by way of non-limitative example with reference to the accompanying drawings, in which:
Fig. 1 is a diagram of a receiver apparatus;
Fig. 2 is a picture of a displayed channel listing; and
Fig. 3 is a picture of a displayed channel listing in an alternative form.

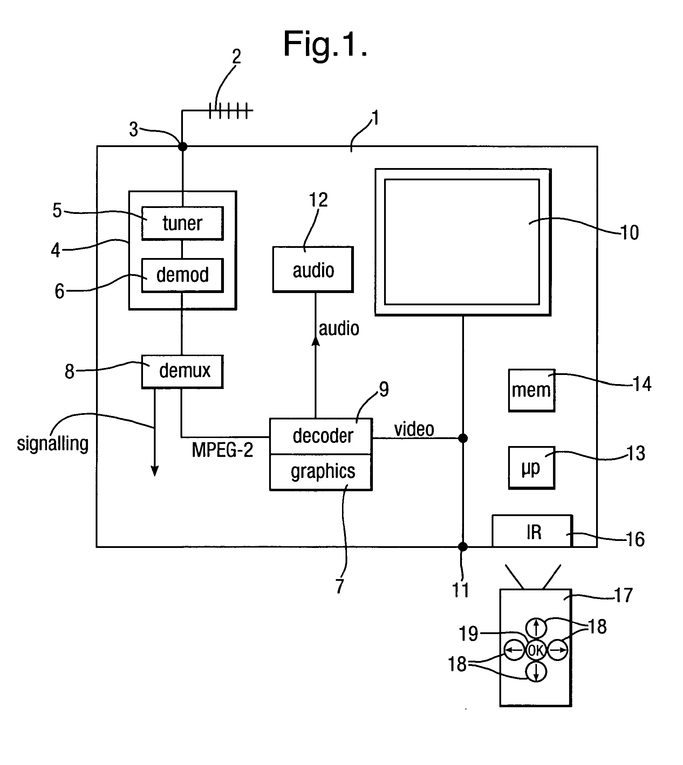

A receiver apparatus 1 in accordance with the present invention is shown in Fig. 1. The receiver apparatus 1 is a television apparatus and has a display device 10, for example an LCD display device, for displaying a video signal.

By way of example, the receiver apparatus 1 is capable of receiving broadcast television signals in accordance with the DVB standard which is an internationally accepted open standard for broadcasting digital television signals. Despite this, the present invention could equally be applied to alternative standards for broadcasting digital television signals, such as the ARIB standard (for example, in Japan), or the ATSC standard (for example, in the United States).

According to the DVB standard, the broadcast television signal comprises a stream of packets of data multiplexed together and carried modulated onto a radio frequency (RF) carrier signal in a single RF channel. The stream is known as a transport stream and contains packets of video signal data, packets of audio signal data and packets of signalling data. The video signal data and audio data represent programmes. In this example, the broadcast television signals are encoded in accordance with the MPEG-2 standard but other types of encoding are possible. The signalling data is metadata concerning the programmes. Each packet of signalling data is associated with a particular table, the arrangement and content of which is defined in EN 300 468.

The term "channel" can have different meanings. The stream is referred to as a "channel" in the DVB standard because it corresponds to a transmission channel. Such a stream carries packets of data representing several "services" multiplexed together in a single transmission channel. Although the term "service" is used in the DVB standard, this is a "channel" as understood by a viewer, that is a series of programmes (or "events") provided by a broadcaster. Examples of channels in this latter sense are BBC1 and BBC2 (in the United Kingdom), ABC and CBS (in the US), and Das Erste and ZDF (in Germany). Herein, except where reference is made explicitly to a "transmission channel", the term "channel" is used in the latter sense as understood by the viewer, because the present invention is concerned with allowing the user to select a desired channel.

As shown in Fig. 1, the receiver apparatus 1 is connected to an external antenna 2 in a conventional manner through a socket 3. The receiver apparatus 1 has a receiver circuit 4 which is supplied with a radio frequency television broadcast signal received by the antenna 2.

The receiver circuit 4 comprises an RF tuner 5 which extracts the desired broadcast signal and a demodulator 6 which demodulates the broadcast signal to extract a multiplexed signal of a single broadcast transmission channel. In this example, the broadcast digital television signal is a terrestrial signal transmitted on a RF carrier. As an alternative, the receiver apparatus 1 could be adapted to receive other types of broadcast television signal, for example an analog television signal or a digital television signal broadcast from a satellite, over a cable or over a computer network (eg Internet Protocol TV).

As each broadcast transmission channel carries a multiplexed signal containing the data of a plurality of services, ie channels, the transport stream extracted by the demodulator 6 is supplied to a demultiplexer 8. The demultiplexer 8 demultiplexes the packets of data in the transport stream to extract the video signals, audio signals and signalling data of a single service, ie channel.

The packets of the video signal extracted by the demultiplexer 8 is supplied to an MPEG-2 decoder 9 for decoding the video signals in accordance with the MPEG-2 standard. The MPEG-2 decoder 9 outputs an uncompressed video stream which is supplied to a display device 10 which displays the video images of the video stream. The uncompressed video stream is also supplied to an output connector 11. Although in this example the receiver apparatus 1 is a television apparatus, the invention can equally be applied to other types of receiver apparatus. The receiver apparatus might for example be one without a display device 10 such as a set-top box for supplying the uncompressed video stream via the output connector 11 to a separate television apparatus, or a recoding apparatus including a recording device for recording the uncompressed video signal.

The packets of the audio signal extracted by the demultiplexer 8 are supplied the decoder 9 which decodes the audio signal and supplies it to an audio circuit 12 arranged to reproduce the sound. Alternatively the receiver apparatus 1 may output the decoded audio signal.

The receiver apparatus 1 includes a controller 13 which controls the operation of the components of the receiver apparatus 1. The controller 13 is implemented by a microprocessor running an appropriate program. The receiver apparatus 1 also has a memory 14 such as a RAM which is used by the controller 13. The receiver apparatus 1 also includes an IR (infra-red) unit 16 capable of receiving signals from a remote commander 17. The remote commander 17 is operated by a user to provide user-inputs to the receiver apparatus 1. Such user inputs are provided to the controller 13 which is responsive to the user inputs to control the operation of the receiver apparatus 1. Of course the receiver apparatus 1 could include other types of user input device besides the IR unit 16.

The decoder 9 includes a graphics generator 7. The controller 13 controls the graphics generator 7 to generate graphics representing a graphical user interface (GUI). These graphics may be superimposed on or mixed with the video signal output by the decoder 9, so that they are displayed on the display device 10. Alternatively, these graphics may be output from the decoder 9 separately from the output video signal for display on the display device 10. Thus the user can view the GUI on the display device 10.

As an alternative to being part of the decoder 9, the graphics generator 6 could be provided elsewhere in the receiver apparatus 1.

Amongst the operations of the receiver apparatus 1, the controller 13 controls the receiver circuit 4 and the demultiplexer 8 to select the broadcast video signal of a desired channel. To allow the user to select a desired channel, the controller 13 implements a channel selection GUI as follows, in response to a user input indicating a channel selection function.

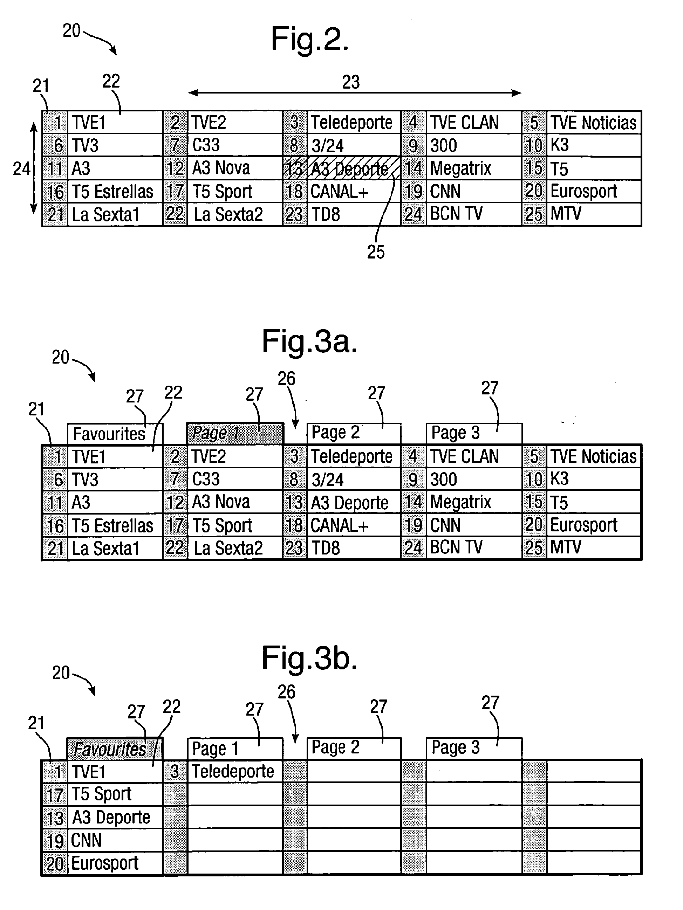

The controller 13 controls the graphics generator 7 to generate graphics representing a channel listing 20 which is consequently displayed on the display device 10, as shown in Fig. 2. The channel listing 20 comprises an array of representations of channels. In this example, the representation for each channel consists of the channel number 21 and name of the channel 22, although for clarity reference numerals 21 and 22 for the first channel only are shown in Fig. 2. Although a textual representation is shown in Fig. 2, in general the representation could take any form and may include or be a non-textual graphic such as a logo or icon. The content of the channel listing 20 is derived by the controller 13 from the signalling data output by the demultiplexer 8 as is conventional. The size of the channel listing 20 may be variable depending on the number of channels available for reception.

As shown in Fig. 2, in the channel listing 20 the array of representations of channels are arranged in two dimensions extending in the horizontal direction 23 and the vertical direction 24 (the arrows for the directions 23 and 24 being merely for illustrative purposes in Fig. 2, not part of the displayed graphics).

In the channel listing 20, one of the channels is marked by a cursor 25. In the example of Fig. 2 the cursor 25 is formed by shading of the marked channel (being currently Channel 13 having the name "A3 Deporte"), but in general the cursor 25 could be any graphical marking of the representation of a channel in the channel listing 20.

The controller 13 is responsive to navigational user inputs indicative of movements in the directions 23 and 24. For example, the remote control device 17 might include buttons 18 with arrows pointing up, down, left and right to provide user inputs indicative of movements in corresponding directions on the channel listing. In response to such navigational user inputs, the controller 13 causes the cursor 25 to move in the direction indicated thereby. For example, in the example of Fig. 2, if the navigational user input indicates a movement to the right and a movement to down then the cursor is moved to Channel 19 having the name "CNN". By means of the two-dimensional arrangement of the channel listing 20, navigation between the channels is quicker and less labourious to the user than in the case of a one-dimensional channel listing of a conventional type. For example in the change from Channel 13 to Channel 19 just mentioned, there are needed only two user inputs (right, down) or a single user input in the event that user inputs can indicate diagonal movement, whereas with a one-dimensional channel listing six incidences of the same user input (down) are needed.

To move the cursor 25, the displayed channel listing 20 may remain stationary as shown in Fig. 2 but with the position of the cursor 25 moving relative thereto. An alternative option is that the position of the cursor 25 may remain stationary and the displayed channel listing 20 may be scrolled across the display device 10. This alternative option may be applied permanently or may be applied only when the cursor 25 reaches the edge of the field of view of the displayed channel listing 20. This alternative option is advantageous because it allows the field of view of the displayed channel listing 20 to be smaller than the entire channel listing 20 which is convenient to list a large number of channels without making the size of the representations of the channels too small.

The controller 13 further controls the receiver circuit 4 and the demultiplexer 8 to select the broadcast video signal of a channel marked by the cursor 25. Typically this is done in response to a user input indicating that the user wishes to select the current channel, for example derived from a button 19 marked "OK". However this is not the only possibility. As an alternative, the channel may be changed in response to the cursor 25 remaining marking a channel for a predetermined period of time. Similarly, if the channel listing 20 is displayed superimposed on the video signal of the currently received channel, the channel may be changed every time the cursor 25 moves.

Figs. 3a and 3b show a channel listing 20 of an alternative form in which the representations of the channels are arranged on a plurality of pages 26, each page 26 comprising an array of representations of channels arranged in two dimensions. Only a single page 26 is displayed at a time. For example Fig. 3a illustrates the second page 26 labelled "Page1" being displayed whereas Fig. 3b illustrates the first page 26 labelled "Favourites" being displayed. The different pages 26 may have representations of different channels or of common channels and are configurable by the user. For example the first page 26 labelled "Favourites" may contain the most frequently selected channels. This arrangement of the channel list 20 facilitates the management of a large number of channels.

Each page 26 has a tab 27. The tabs 27 of all the pages 26 are displayed simultaneously. The tabs 27 are arranged at positions on a common notional grid with the representations of the channels, in particular with a tab 27 at the top of each column of representations of the channels. The cursor 25 is movable off the array of representations of the channels of the currently displayed page 26 to mark a tab 27. For example, in the example of Fig. 3a the cursor 27 marks the tab 27 of the page 26 labelled "Page1". In response to the cursor 27 marking a tab 27 of a page 26 which is not currently displayed, the controller 13 causes the page 27 of the channel list 20 which is displayed to change to the page 26 of the marked tab 27. This facilitates changing of the pages 26.

Of course many variations are possible. One particular variation is to change the layout of the representations of the channels on the channel list 20. It is also possible to increase the number of dimensions of the channel list 20, for example to three dimensions in which case the channel list may be displayed and navigated using three-dimensional graphics techniques.

Although the invention is described above as relating to a receiver apparatus for receiving television signals, the invention can be equally applied to a radio receiver apparatus for receiving broadcast audio signals, for example a Digital Audio Broadcast (DAB) radio receiver apparatus. The receiver apparatus 1 described in detail above can be adapted in a straightforward manner to receiver such broadcast audio signals. In this case the display device 10 might not display any television signals but is still used to display a GUI as described above.

## Claims

1. A method of providing channel selection in a receiver apparatus capable of receiving television signals of a plurality of channels, the method comprising:
providing display of a channel listing comprising an array of representations of channels arranged in at least two dimensions;
in response to navigational user inputs, moving a cursor marking a representation of a channel on the displayed channel listing in directions in the at least two dimensions indicated by the navigational user inputs; and
controlling the receiver apparatus to receive the televison signal of the channel marked by the cursor.

2. A method according to claim 1, wherein
the channel listing comprises a plurality of pages, each page comprising an array of representations of channels arranged in at least two dimensions, a single page being displayed at a time, and
the method further comprises changing the page which is displayed in response to user inputs.

3. A method according to claim 2, wherein
the plural pages each have a tab,
the tabs of plural pages are displayed simultaneously,
the cursor is movable to mark a tab, and
in response to the cursor marking a tab, the page which is displayed is changed to the page corresponding to the marked tab.

4. A method according to any one of claims 1 to 3, wherein
the field of view of the displayed channel listing is smaller than the array of representations of channels, and
the cursor is moved by scrolling the array of representations of channels across the field of view.

5. A method according to any one of claims 1 to 4, wherein said step of controlling the receiver apparatus to receive the televison signal of the channel marked by the cursor is performed in response to a channel selection user input.

6. A method according to any one of claims 1 to 5, wherein said step of controlling the receiver apparatus to receive the televison signal of the channel marked by the cursor is performed in response to the cursor remaining marking the channel for a predetermined period of time.

7. A receiver apparatus for receiving television signals, the apparatus comprising:
a receiver unit selectively operable to receive a television signal of any one of a plurality of channels;
a channel listing generator operable to provide display of a channel listing comprising an array of representations of channels arranged in at least two dimensions;
a user input device capable of accepting navigational user inputs indicating movements in directions in the at least two dimensions around the channel listing, the channel listing generator being responsive to navigational user inputs to move a cursor marking a representation of a channel on the displayed channel listing in directions in the at least two dimensions indicated by the navigational user inputs; and
a controller operable to control the receiver unit to receive the televison signal of the channel marked by the cursor.

8. A receiver apparatus according to claim 7, wherein
the channel listing provided by the channel listing generator comprises a plurality of pages, each page comprising an array of representations of channels arranged in at least two dimensions, a single page being displayed at a time, and
the channel listing generator is responsive to user inputs from the user input device to change the page which is displayed.

9. A receiver apparatus according to claim 8, wherein
the plural pages each have a tab,
the tabs of plural pages are displayed simultaneously,
the channel listing generator is responsive to the navigational user inputs to move the cursor to mark a representation of a channel or to mark a tab, and is responsive to the cursor marking a tab to change the page which is displayed to the page corresponding to the marked tab.

10. A receiver apparatus according to any one of claims 7 to 9, wherein
the channel listing generator is operable to provide display of the channel listing with the field of view of the displayed channel listing being smaller than the array of representations of channels, and
the channel listing generator is operable to move the cursor by scrolling the array of representations of channels across the field of view.

11. A receiver apparatus according to any one of claims 7 to 10, wherein the controller is operable to control the receiver unit to receive the televison signal of the channel marked by the cursor in response to a channel selection user input.

12. A receiver apparatus according to any one of claims 7 to 11, wherein the controller is operable to control the receiver unit to receive the televison signal of the channel marked by the cursor in response to the cursor remaining marking the channel for a predetermined period of time.

13. A receiver apparatus according to any one of claims 7 to 12, further comprising a display device, the channel listing generator being operable to provide said display of a channel listing on the display device.

14. A receiver apparatus according to any one of claims 7 to 12, wherein the channel listing generator is operable to provide said display of a channel listing by outputting a video signal representing the displayed channel listing for display on a display device.
